# EUROPEAN PATENT APPLICATION

(11) **EP 2 827 425 A1**
(43) Date of publication of application: **21.01.2015**
(21) Application number: 13761315.4
(22) Date of filing: 04.03.2013
(51) Int. Cl.: H01M 8/04, C25B 5/00, H01M 8/00, H01M 8/06, H01M 8/12

(54) **SECONDARY CELL-TYPE FUEL CELL SYSTEM**

(30) Priority: 12.03.2012 JP 2012054656
(71) Applicant: Konica Minolta, Inc., Tokyo 100-7015 (JP)
(72) Inventor: NODA, Atsuhiro, Tokyo 100-7015 (JP)
(74) Representative: Hoffmann Eitle
(86) International application number: PCT/JP2013/055781
(87) International publication number: WO 2013/137033

(57) **Abstract**

This secondary cell-type fuel cell system is provided with: a fuel generation unit which by a chemical reaction generates fuel that is a reducing gas, and which can be regenerated by means of the reverse reaction of said chemical reaction; a power generation and electrolysis unit having a power generation function for generating power using the reducing gas supplied from the fuel generation unit, and an electrolysis function for electrolyzing an oxidized gas which, a product of the aforementioned reverse reaction, is supplied from the fuel generation unit during regeneration of the fuel generation unit; a circulation unit which forcibly circulates a gas containing the reducing gas and/or the oxidized gas between the fuel generation unit and the power generation and electrolysis unit; and a control unit for controlling the circulation unit. Further, the control unit controls the flow rate of the gas circulated by the circulation unit differently during power generation and during charge operations.

## Description

### Technical Field

The present invention relates to a secondary cell-type fuel cell system that is able to perform not only a power generation operation but also a charge operation.

### Background Art

A fuel cell has typically a cell structure in which a solid polymer electrolyte membrane using a solid polymer ion exchange membrane, a solid oxide electrolyte membrane using yttria stabilized zirconia, or the like is sandwiched between a fuel electrode (anode) and an oxidizer electrode (cathode) from both sides. And, a fuel gas flow path for supplying a fuel gas (e.g., hydrogen gas) to the fuel electrode and a oxidized gas flow path for supplying an oxidizer gas (e.g., oxygen or air) to the oxidizer electrode are formed, the fuel gas and the oxidizer gas are supplied respectively to the fuel electrode and the oxidizer electrode via these flow paths, whereby power generation is performed.

The fuel cell has by nature a high efficiency in derivable power energy; accordingly, the fuel cell has a form of power generation that is not only useful to energy saving but also excellent environmentally, and is expected as a key to solution to global energy and environmental problems.

### Citation List

### Patent Literature

Patent Document 1: PCT International Publication WO/2011/040182
Patent Document 2: PCT International Publication WO/2011/052283

### Summary of Invention

### Technical Problem

As a secondary cell-type fuel cell system that is able to perform power generation and charge, systems are proposed (see Patent Document 1 and Patent Document 2), in which a space where a fuel electrode and a fuel generation member are disposed is sealed and a reaction is prompted by natural diffusion. However, in the natural diffusion, a reaction velocity of a fuel gas is limited; accordingly, high output power is unobtainable. Besides, there is a problem that the output is not stable. And, in a case of solving this problem, it is desirable that the energy efficiency of the entire system is sacrificed as extremely less as possible.

In light of the above circumstances, it is an object of the present invention is to provide a secondary cell-type fuel cell system that is able to raise and stabilize the output and has good energy efficiency of the entire system.

### Solution to Problem

To achieve the above object, a secondary cell-type fuel cell system comprises: a fuel generation portion that generates a fuel that is a reducing gas by a chemical reaction and is renewable by a reverse reaction of the chemical reaction; a power generation-electrolysis portion that has a power generation function to perform power generation by using the reducing gas supplied from the fuel generation portion and an electrolysis function to electrolyzes an oxidizing gas that is a product of the reverse reaction and is supplied from the fuel generation portion during a renewal period of the fuel generation portion; a circulation portion that forcibly circulates a gas, which contains the reducing gas and/or the oxidizing gas, between the fuel generation portion and the power generation-electrolysis portion; and a control portion that controls the circulation portion; wherein the control portion controls the circulation portion so that a flow rate of the gas circulated by the circulation portion during power generation operation and that during charge operation are different from each other. In the meantime, the power generation-electrolysis portion may have a structure that includes, for example, a fuel cell switched between: the power generation operation that uses the reducing gas supplied from the fuel generation portion; and the electrolysis operation that electrolyzes the oxidizing gas that is the product of the reverse reaction and supplied from the fuel generation portion during the renewal period of the fuel generation portion. Besides the power generation-electrolysis portion may have a structure that includes, for example, separately: a fuel cell which performs the power generation by using the reducing gas supplied from the fuel generation portion; and an electrolysis device which electrolyzes the oxidizing gas that is the product of the reverse reaction and supplied from the fuel generation portion during the renewal period of the fuel generation portion.

### Advantageous Effects of Invention

According to the secondary cell-type fuel cell system of the present invention, it is possible to raise and stabilize the output and improve the energy efficiency of the entire system.

### Brief Description of Drawings

[Fig. 1] is a view showing a schematic structure of a secondary cell-type fuel cell system according to a first embodiment of the present invention.
[Fig. 2] is a time chart showing a setting example of a flow rate of a gas circulated by a pump.
[Fig. 3] is a time chart showing another setting example of a flow rate of a gas circulated by a pump.
[Fig. 4] is a time chart showing still another setting example of a flow rate of a gas circulated by a pump.
[Fig. 5] is a view showing a modification of the secondary cell-type fuel cell system according to the first embodiment of the present invention.
[Fig. 6] is a view showing a schematic structure of a secondary cell-type fuel cell system according to a second embodiment of the present invention.
[Fig. 7] is a view showing a schematic structure of a secondary cell-type fuel cell system according to a third embodiment of the present invention.
[Fig. 8] is a view showing a schematic structure of a secondary cell-type fuel cell system according to a fourth embodiment of the present invention.

### Description of Embodiments

Embodiments of the present invention are described hereinafter with reference to the drawings. The present invention, however, is not limited to the embodiments described later.

### <First embodiment>

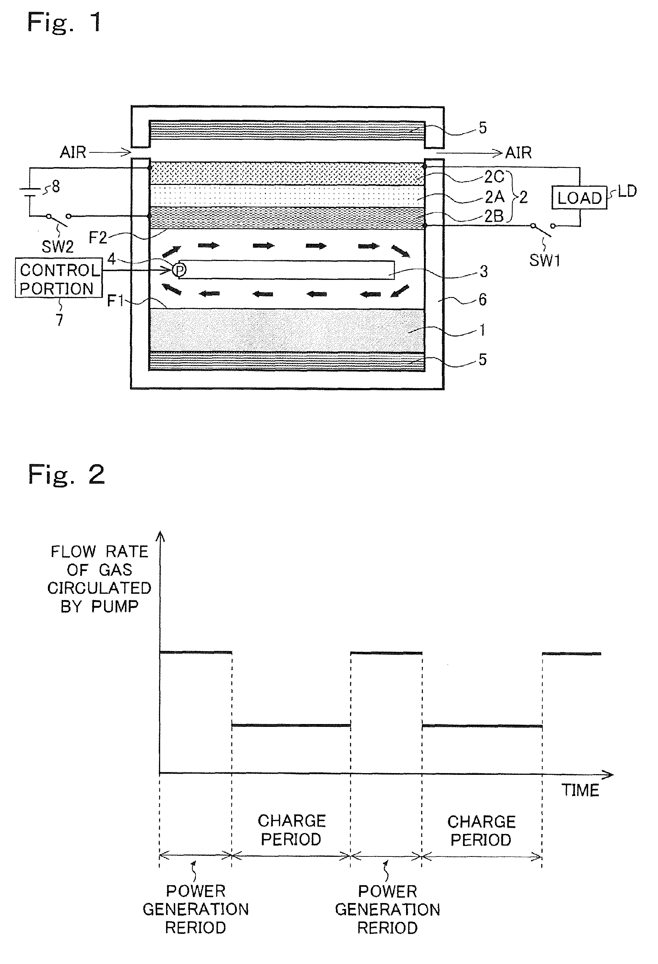

Fig. 1 shows a schematic structure of a secondary cell-type fuel cell system according to a first embodiment of the present invention. The secondary cell-type fuel cell system according to the first embodiment of the present invention includes: a fuel generation portion 1; a fuel cell portion 2; a partition member 3; a pump 4; a heater 5 that adjusts temperatures of the fuel generation portion 1 and fuel cell portion 2; a container 6 that houses the fuel generation portion 1, the fuel cell portion 2, the partition member 3, the pump 4, and the heater 5; and a control portion 7. In the meantime, Fig. 1 shows schematically a gas flow produced by the pump 4 by means of arrows.

As a material of the fuel generation portion 1, a material is usable, in which for example, a metal is used as a base body; a metal or a metallic oxide is added to a surface of the base body; a fuel (e.g., hydrogen) is generated by a oxidation reaction with an oxidizing gas (e.g., water vapor), wherein the material is renewable thanks to a reduction reaction with a reducing gas (e.g., hydrogen). As the base body metal, there are, for example, Ni, Fe, Pd, V, Mg, and alloys that use these metals as a matrix. Fe is inexpensive and easy to process; accordingly, Fe is especially preferable. Besides, as the added metal, there are Al, Rh, Pd, Cr, Ni, Cu, Co, V, and Mo, and as the added metallic oxide, there are SiO₂, and TiO₂. However, the metal used as the base body and the added metal are not the same material. In the meantime, in the present embodiment, as the fuel generation portion 1, a fuel generation member having Fe as a main body is used.

The fuel generation member having Fe as the main body can generate a hydrogen gas as a fuel (reducing gas) by consuming water vapor that is an oxidizing gas thanks to an oxidation reaction, for example, indicated by a formula (1) described below.

4H₂O + 3Fe → 4H₂ + Fe₃O₄ (1)

When the oxidation reaction of the iron indicated by the above formula (1) proceeds, the change from the iron to the iron oxide proceeds and the remaining amount of the iron decreases; however, thanks to a reverse reaction of the above formula (1), namely, a reduction reaction indicated by a formula (2) described below, it is possible to renew the fuel generation portion 1. In the meantime, it is also possible to perform the oxidation reaction of the iron indicated by the above formula (1) and the reduction reaction of the following formula (2) at a temperature lower than 600°C.

4H₂ + Fe₃O₄ → 3Fe + 4H₂O (2)

In the fuel generation portion 1, it is desirable that a surface per unit volume is enlarged to raise its reaction characteristic. As a measure to increase the surface area per unit volume of the fuel generation portion 1, for example, the main body of the fuel generation portion 1 may be broken into micro-particles and the micro-particles may be molded. As the breaking method, there is a method in which for example, a ball mill or the like is used to pulverize particles. Further, the surface area of the micro-particles may be further increased by generating cracks in the micro-particles by means of a mechanical method or the like, or the surface area of the micro-particles may be further increased by roughing the surface of the micro-particles by means of acid treatment, alkaline treatment, sandblasting or the like. Besides, the fuel generation portion 1 may be produced by hardening the micro-particles with gaps left somewhat to allow a gas to pass through, or may be produced by forming the micro-particles into pellet-like pieces and embedding many of these pieces in a space.

As shown in Fig. 1, the fuel cell portion 2 has an MEA structure (membrane-electrode assembly) in which a fuel electrode 2B and an air electrode 2C, that is, an oxidant electrode are connected to both surfaces of an electrolyte membrane 2A. In the meantime, Fig. 1 shows the structure in which only one MEA is disposed; however, a plurality of MEAs may be disposed, or further the plurality of MEAs may be laminated.

A fuel supplied surface F2 of the fuel electrode 2B being supplied with a fuel, and a fuel emitting surface F1 of the fuel generation portion 1 emitting a fuel oppose each other and disposed in parallel with each other over a predetermined distance. Besides, in the present embodiment, the fuel electrode 2B and the fuel generation portion 1 have each a flat-plate shape; however, the fuel electrode 2B and the fuel generation portion 1 may be formed into a cylindrical shape to make the fuel supplied surface F2 and the fuel emitting surface F1 oppose each other.

The partition member 3 is disposed between the fuel supplied surface F2 and the fuel emitting surface F1. The partition member 3 is connected to an inner wall of the container 6 before and behind the paper surface of Fig. 1. On the other hand, in a left-right direction of the paper surface of Fig. 1, gaps are disposed between the partition member 3 and the inner wall of the container 6.

The pump 4 forcibly circulates a gas existing in the space between the fuel supplied surface F2 and the fuel emitting surface F1 in the direction indicated by the arrows, for example, shown in Fig. 1. In the meantime, instead of the pump 4, another circulator (e.g., a blower, a compressor or the like), which utilizes mechanical energy, may be used.

The container 6 includes: an air supply opening for supplying air into a space housing the air electrode 2C; and an air exhaust opening for exhausting air from the space housing the air electrode 2C. The airflow may be controlled by means of, for example, a fan or the like that is disposed outside the container 6. In the meantime, the airflow direction is not limited to the direction shown in Fig. 1, but may be opposite to the direction shown in Fig. 1. Besides, in the present embodiment, air is used as the oxidant gas, but an oxidant gas other than air may be used.

As a material of the electrolyte membrane 2A, it is possible to use, for example, a solid oxide electrolyte that uses yttria stabilized zirconia (YSZ), besides, for example, it is possible to use a solid polymer electrolyte such as Nafion (trademark of Du Pont), cation electro-conductive polymer, anion electro-conductive polymer, or the like; however, these are not limiting, and materials, which transmit hydrogen ions, oxygen ions, hydroxide ions or the like and satisfy the electrolyte characteristics of the fuel cell, may be used. In the meantime, in the present embodiment, as the electrolyte membrane 2A, an electrolyte which transmits oxygen ions or hydroxide ions, for example, a solid oxide electrolyte membrane which utilizes yttria stabilized zirconia (YSZ) is used.

The housing space, which is formed by the container 6 and the fuel cell portion 2 to house the partition member 3; the fuel generation portion 1; and the heater 5, is filled with mainly an oxidizing gas (e.g., water vapor, carbon dioxide or the like), thereafter, sealed or closed; however, a small amount of fuel (e.g., a reducing gas such as a hydrogen gas, a carbon monoxide gas or the like) may be mixed. In this sealed or closed space, a hydrogen gas, that is, the reducing gas generated from the fuel generation portion 1 and water vapor, that is, the oxidizing gas produced by power generation circulate to be used for power generation, charge, oxidation and reduction reactions.

During power generation operation, by turning on a switch SW1 and turning off a switch SW2, the fuel cell portion 2 is electrically connected to a load LD. On the other hand, during charge operation, by turning off the switch SW1 and turning on the switch SW2, the fuel cell portion 2 is electrically connected to a power source 8.

For example, in a case where hydrogen is used as the fuel, in the present embodiment, during the power generation operation, a reaction of a formula (3) described below occurs at the fuel electrode 2B.

H₂ + O²⁻ → H₂O + 2e- (3)

The electrons generated by the reaction of the above formula (3) travel from the fuel electrode 2B through the load LD to reach the air electrode 2C, so that a reaction of a formula (4) described below occurs at the air electrode 2C.

1/2O₂ + 2e- → O²⁻ (4)

And, the oxygen ions generated by the reaction of the above formula (4) reach the fuel electrode 2B via the electrolyte membrane 2A. By repeating the above series of reactions, the fuel cell portion 2 performs the power generation operation.

And, thanks to the oxidation reaction of Fe indicated by the above formula (1), the fuel generation portion 1 consumes the water vapor supplied from the fuel cell portion 2 to generate a hydrogen gas, and supplies the hydrogen gas to the fuel cell portion 2.

Besides, during the charge operation, the fuel cell portion 2 operates as an electrolysis device and reverse reactions of the above formulas (3) and (4) occur; the water vapor is consumed at the fuel electrode 2B to generate the hydrogen gas; thanks to the reduction reaction indicated by the above formula (2), the fuel generation portion 1 proceeds with a change from the iron oxide to the iron to increase the remaining amount of the iron, namely, the fuel generation portion 1 is renewed, consumes the hydrogen gas supplied from the fuel cell portion 2 to generate water vapor, and supplies the water vapor to the fuel cell portion 2.

The electrolyte membrane 2A can be formed by using CVD-EVD (Chemical Vapor Deposition-Electrochemical Vapor Deposition) or the like in the case of a solid oxide electrolyte and can be formed by using an applying method or the like in the case of a solid polymer electrolyte.

The fuel electrode 2B and the air electrode 2C can each have a structure which includes, for example, a catalyst layer in contact with the electrolyte membrane 2A and a diffusion electrode laminated on the catalyst layer. As the catalyst layer, for example, it is possible to use a material or the like in which platinum black or platinum alloy is borne by carbon black. Besides, as a material of the diffusion electrode of the fuel electrode 2B, it is possible to use, for example, carbon paper, Ni-Fe based cermet, Ni-YSZ based cermet or the like. Besides, as a material of the diffusion electrode of the air electrode 2C, it is possible to use, for example, carbon paper, a La-Mn-O based compound, a La-Co-Ce based compound or the like. The fuel electrode 2B and the air electrode 2C can be each formed by using deposition or the like, for example.

In the secondary cell-type fuel cell system according to the first embodiment of the present invention, the fuel gas is forcibly circulated by the pump 4; accordingly, the flow velocity becomes fast compared with the case of natural diffusion, so that it is possible to sufficiently supply the fuel to the fuel electrode 2B for the reaction occurring at the fuel electrode 2B. Because of this, the output becomes large compared with the case of natural diffusion, and it is possible to control the gas flow to be constant; accordingly, it is possible to stabilize the output.

As to the flow rate of the gas that is circulated by the circulation portion during the power generation operation, the minimum value in a range where the generated power becomes maximum is beforehand obtained by means of an experiment or a theoretical calculation. And, the control portion 7 stores, in an internal memory or the like, the minimum value in the range where the generated power becomes maximum or a value of the minimum value plus a little margin; during the power generation operation, the control portion 7 sets the flow rate of the gas circulated by the pump 4 at the minimum value in the range where the generated power becomes maximum or at the value of the minimum value plus the little margin and controls the pump 4. The gas flow rate described here is, for example, an amount (volume) of the gas flowing through a fixed cross-section within a unit period and is measurable by means of a flow meter.

Here, if there is not a special situation that requires a rapid charge or the like, it is not necessary to shorten the charge period. Because of this, like in the power generation operation, also in the charge operation, if the flow rate of the gas circulated by the pump 4 is set at the minimum value in the range where the generated power becomes maximum or at the value of the minimum value plus the little margin, the charge period becomes shorter than necessary. It is not a problem that the charge period becomes shorter than necessary; however, like in the power generation operation, also in the charge operation, as described above, if the flow rate of the gas circulated by the pump 4 is set at the minimum value in the range where the generated power becomes maximum or at the value of the minimum value plus the little margin, the drive energy supplied to the pump 4 during the charge operation increases wastefully; accordingly, a problem occurs, in which the energy efficiency of the entire system deteriorates. This is generally because in a case where the drive energy supplied to the pump is raised, the drive amount of the pump does not increase in direct proportion to the raised drive energy, but represents a slow curve that gradually increases and the energy efficiency declines. Accordingly, except for the case where a rapid charge is required and it is necessary to supply large drive energy to the pump 4, it is possible to hold the energy efficiency of the entire system in a good state by keeping low the drive energy supplied to the pump 4.

Accordingly, in the secondary cell-type fuel cell system according to the first embodiment of the present invention, the control portion 7 controls the pump 4 such that the flow rate of the gas circulated by the pump 4 during the charge operation becomes lesser than the flow rate of the gas circulated by the pump during the power generation operation. In this way, it is possible to prevent the drive energy supplied to the pump 4 during the charge operation from increasing wastefully; accordingly, the energy efficiency of the entire system becomes good.

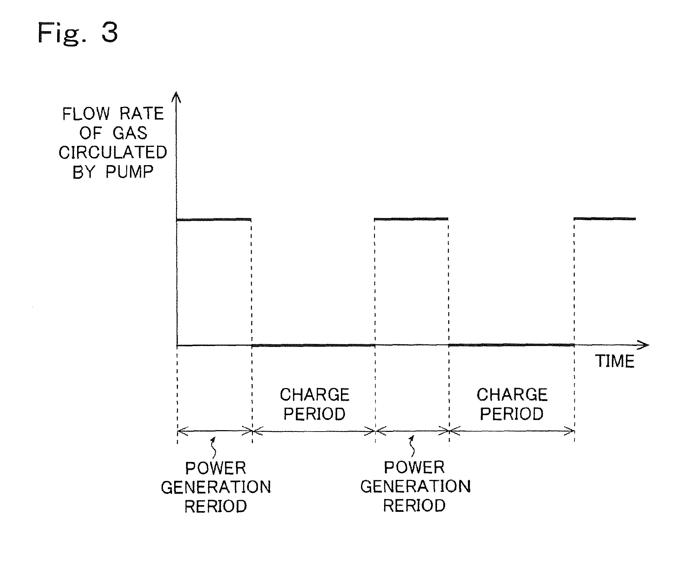

The flow rate of the gas circulated by the pump 4 during the charge operation may be decided considering a securable charge period. Accordingly, the pump 4 may be operated as shown in Fig. 2 or stopped as shown in Fig. 3 during the charge operation. If the pump 4 is stopped during the charge operation, the energy efficiency of the entire system becomes best; accordingly, if the securable charge period is sufficiently long and it is possible to stop the pump 4 during the charge operation, it is desirable to stop the pump 4 during the charge period. Even in the case where the pump 4 is stopped, thanks to an inclination of a water-vapor partial-pressure ratio in the gas (mixed gas of the hydrogen gas and water vapor) in the closed space, the gas circulates, slowly though.

As to the power generation period and the charge period, for example, it is preferable that the power generation period is set at daytime and the charge period is set at night time during which inexpensive night-time power is available. In the meantime, although not disposed in Fig. 2, Fig. 3, and Fig. 4 described later, the stop period (period during which the secondary cell-type fuel cell system does not perform the power generation operation and the charge operation) may be suitably disposed.

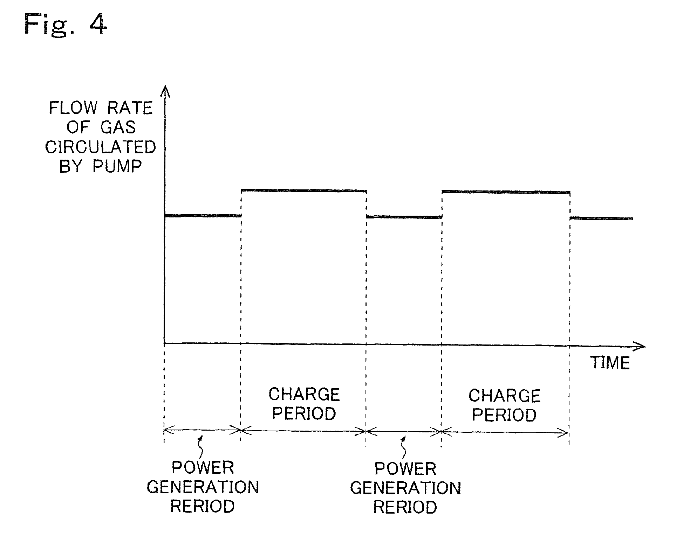

Besides, in the case where the special situation that requires the rapid charge or the like occurs, as shown in Fig. 4, the control portion 7 may control the pump 4 to increase the flow rate of the gas circulated by the pump 4 during the charge operation than the flow rate of the gas circulated by the pump 4 during the power generation operation. In this case, the control portion 7 has: a first control mode in which the flow rate of the gas circulated by the pump 4 during the charge operation is lessened than the flow rate of the gas circulated by the pump 4 during the power generation operation; and a second control mode in which the flow rate of the gas circulated by the pump 4 during the charge operation is increased than the flow rate of the gas circulated by the pump 4 during the power generation operation, wherein the control portion may switch the control modes in accordance with presence of the above special situation.

Besides, in the above embodiment, the flow rate of the gas circulated by the pump 4 is kept constant in the range where the generated power becomes maximum such that the maximum output is always possible during the power generation operation. However, for example, if the control portion 7 obtains information about the power necessary for the load LD and the power necessary for the load LD varies, the flow rate of the gas circulated by the pump 4 during the power generation operation may be changed in accordance with the variation.

Besides, for example, when the fuel generation portion 1 is renewed to a predetermined percentage based on a signal from a detection portion that detects a renewed state of the fuel generation portion 1, the switch SW2 may be switched from the on-state to the off-state and the control portion 7 may stop the pump 4 such that the charge operation of the secondary cell-type fuel cell system according to the first embodiment of the present invention automatically ends when the fuel generation portion 1 is renewed to the predetermined percentage. As the above detection portion, for example, there are an apparatus that detects the renewed state based on a weight change of the fuel generation portion 1, an apparatus that detects the renewed state based on a magnetic permeability change of the fuel generation portion 1 in the case where the fuel generation portion 1 is Fe as in the present embodiment. In the meantime, the above detection portion may be disposed in the fuel cell system or outside the fuel cell system.

Besides, in the above embodiment, the flow rate of the gas circulated by the pump 4 is kept constant during the charge operation. However, for example, the control portion 7 may change the flow rate of the gas circulated by the pump 4 during the charge operation in accordance with the renewed state of the fuel generation portion 1 based on the signal from the above detection portion. As the example in which the flow rate of the gas circulated by the pump 4 during the charge operation is changed in accordance with the renewed state of the fuel generation portion 1, there is a method in which in a case where the renewed percentage of the fuel generation portion 1 is low, the charge speed is raised by increasing the gas flow rate to be ready beforehand for an unexpected situation (e.g., sudden requirement for the power generation); thereafter, the gas flow rate is lessened and the remaining charge is performed.

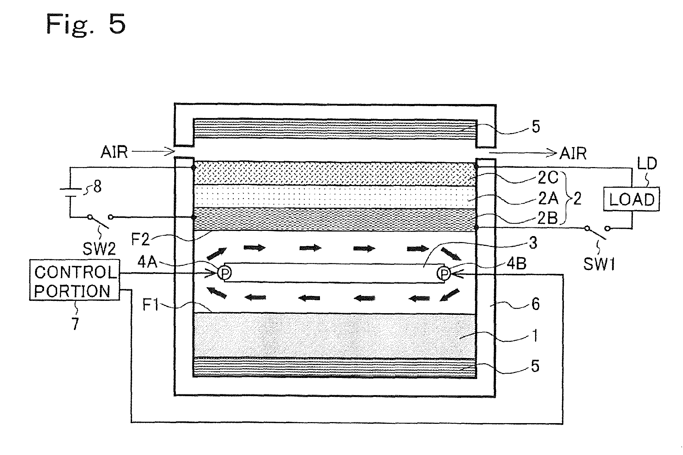

Besides, in the above embodiment, during the power generation operation and the charge operation, the gas is forcibly circulated by the pump 4. However, as shown in Fig. 5, instead of the pump 4, a pump 4A dedicated to the power generation operation and a pump 4B dedicated to the charge operation may be disposed, the gas may be forcibly circulated by the pump 4A dedicated to the power generation operation during the power generation operation, and the gas may be forcibly circulated by the pump 4A dedicated to the power generation operation during the power generation operation.

### <Second embodiment>

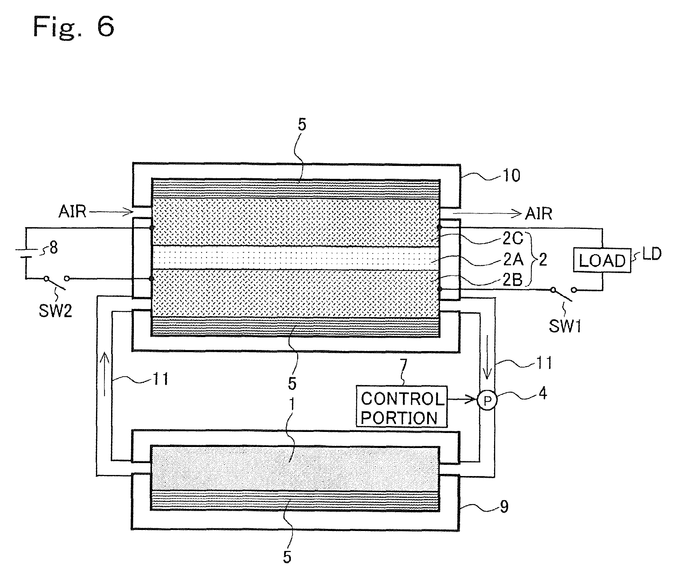

Fig. 6 shows a schematic structure of a secondary cell-type fuel cell system according to a second embodiment of the present invention. In the meantime, in Fig. 6, the same portions as in Fig. 1 are indicated by the same reference numbers and detailed description of them is skipped. Besides, the various modifications suitably described in the first embodiment of the present invention may be applied to the second embodiment of the present invention as long as there are no special contradictions. This also applies to third and fourth embodiments of the present invention described later.

The secondary cell-type fuel cell system according to the second embodiment of the present invention has a structure in which the fuel generation portion 1 and the heater 5 for adjusting the temperature of the fuel generation portion 1 are housed in a container 9; the fuel cell portion 2 and the heater 5 for adjusting the temperature of the fuel cell portion 2 are housed in a container 10; and a pipe 11 for circulating the gas between the fuel generation portion 1 and the fuel cell portion 2 is included and the pump 4 is disposed on the pipe 11. In other words, the secondary cell-type fuel cell system according to the first embodiment of the present invention has the structure in which the fuel generation portion 1 and the fuel cell portion 2 are housed in the same container 3, while the second cell-type fuel cell system according to the second embodiment of the present invention has the structure in which the fuel generation portion 1 and the fuel cell portion 2 are housed in the separate containers (containers 9 and 10). In the meantime, in the present embodiment, the fuel electrode 2B and the heater 5 are in contact with each other; however, a space may be formed between the fuel electrode 2B and the heater 5 and an end portion of a circulation route 11 may be connected to the space.

The control operation of the control portion 7 in the present embodiment is the same as the control operation of the control portion 7 in the secondary cell-type fuel cell system according to the first embodiment of the present invention; accordingly, the secondary cell-type fuel cell system according to the second embodiment of the present invention brings the same effects as the secondary cell-type fuel cell system according to the first embodiment of the present invention.

### <Third embodiment>

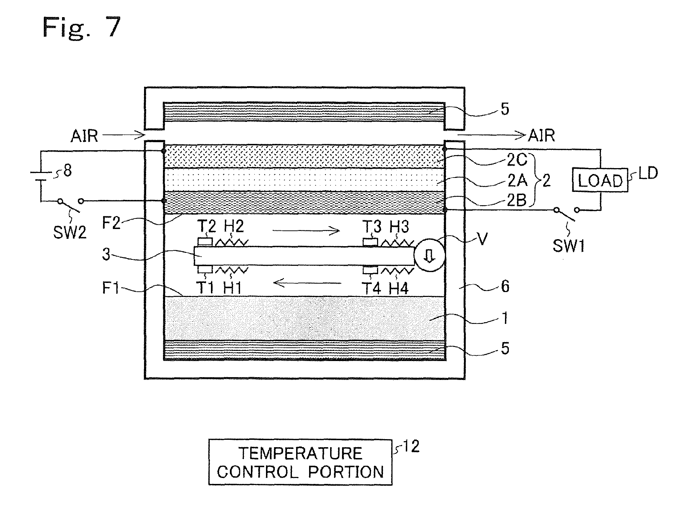

Fig. 7 shows a schematic structure of a secondary cell-type fuel cell system according to a third embodiment of the present invention. In the meantime, in Fig. 7, the same portions as in Fig. 1 are indicated by the same reference numbers and detailed description of them is skipped. Besides, in Fig. 7, to prevent the illustration from becoming complicated, connection lines between a temperature control portion 12 and a set of first to fourth heaters H1 to H4 and connection lines between the temperature control portion 12 and a set of temperature sensors T1 to T4 are omitted.

The secondary cell-type fuel cell system according to the third embodiment of the present invention has a structure in which the pump 4 and the control portion 7 are removed from the secondary cell-type fuel cell system according to the first embodiment of the present invention; instead, the first to fourth heaters H1 to H4, the first to fourth temperature sensors T1 to T4, a check valve V, and the temperature control portion 12 are included.

The first heater H1 heats the vicinity of the left side of the paper surface of the fuel generation portion 1 and the first temperature sensor T1 detects a temperature T₁ of the vicinity of the left side of the paper surface of the fuel generation portion 1. The second heater H2 heats the vicinity of the left side of the paper surface of the fuel electrode 2B and the second temperature sensor T2 detects a temperature T₂ of the vicinity of the left side of the paper surface of the fuel electrode 2B. The third heater H3 heats the vicinity of the right side of the paper surface of the fuel electrode 2B and the third temperature sensor T3 detects a temperature T₃ of the vicinity of the right side of the paper surface of the fuel electrode 2B. The fourth heater H4 heats the vicinity of the right side of the paper surface of the fuel generation portion 1 and the fourth temperature sensor T4 detects a temperature T₄ of the vicinity of the right side of the paper surface of the fuel generation portion 1. The check valve V is disposed in a flow path on the right side of the paper surface of the partition member 3.

The temperature control portion 12 controls the first to fourth heaters H1 to H4 with reference to the detected temperatures T₁ to T₄ by the first to fourth temperature sensors T1 to T4 such that T₄>T₁>T₂>T₃ is satisfied during both the power generation operation and the charge operation.

Because T₄>T₁, the gas existing in the vicinity of the right side of the paper surface of the fuel generation portion 1 moves to the vicinity of the left side of the paper surface of the fuel generation portion 1 thanks to thermal diffusion.

Besides, because T₁>T₂, the gas existing in the vicinity of the left side of the paper surface of the fuel generation portion 1 moves to the vicinity of the left side of the paper surface of the fuel electrode 2B thanks to thermal diffusion.

Besides, because T₂>T₃, the gas existing in the vicinity of the left side of the paper surface of the fuel electrode 2B moves to the vicinity of the right side of the paper surface of the fuel electrode 2B thanks to thermal diffusion.

Because the check valve V is disposed on the right side of the paper surface of the partition member 3, despite T₄>T₃, the gas existing in the vicinity of the right side of the paper surface of the fuel generation portion 1 does not move to the vicinity of the right side of the paper surface of the fuel electrode 2B, and the gas circulates clockwise in accordance with the above temperature gradient.

As described above, by giving the temperature gradient to the gas flow path for circulating the gas between the fuel generation portion 1 and the fuel cell portion 2, it is possible to forcibly circulate the gas circulated in the gas flow path. Besides, depending on the way of giving the temperature gradient, it is possible to control the gas flow rate. For example, by making the temperature gradient during the charge operation smaller than the temperature gradient during the power generation, it is possible to make the flow rate of the gas circulated during the charge operation smaller than the flow rate of the gas circulated during the power generation.

The control portion 7 of the secondary cell-type fuel cell system according to the first embodiment of the present invention targets the pump 4 for the control, while the temperature control portion 12 of the secondary cell-type fuel cell system according to the third embodiment of the present invention targets the first to fourth heaters H1 to H4 for the control; however, both control the gas flow rate in the end and their control operations are the same as each other in terms of the gas flow rate. Accordingly, the secondary cell-type fuel cell system according to the third embodiment of the present invention brings the same effects as the secondary cell-type fuel cell system according to the first embodiment of the present invention.

In the meantime, it is also possible to practically use a combination of the first embodiment of the present invention and the third embodiment of the present invention, namely, use both of: the circulator for forcibly circulating the gas between the fuel generation portion 1 and the fuel cell portion 2 by using the mechanical energy; and the heating apparatus that gives the temperature gradient to the gas flow path for circulating the gas between the fuel generation portion 1 and the fuel cell portion 2.

### <Fourth embodiment>

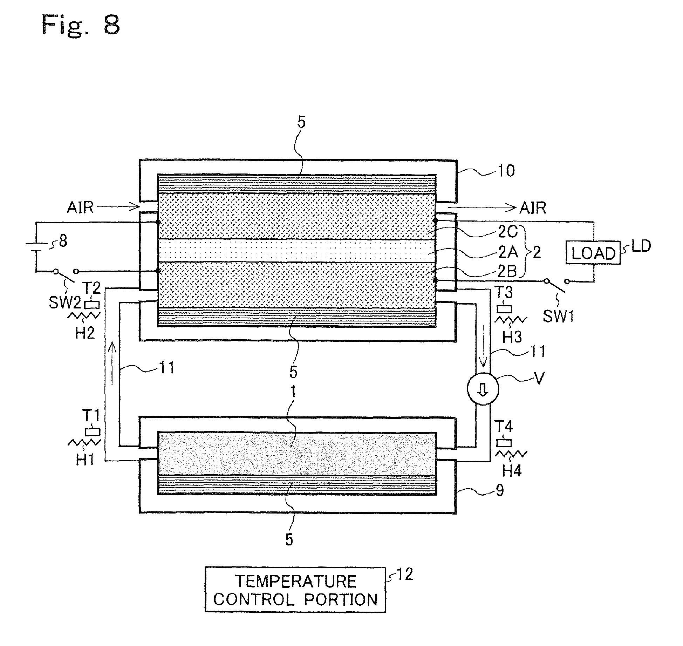

Fig. 8 shows a schematic structure of a secondary cell-type fuel cell system according to a fourth embodiment of the present invention. In the meantime, in Fig. 8, the same portions as in Fig. 6 and Fig. 7 are indicated by the same reference numbers and detailed description of them is skipped. Besides, in Fig. 8, to prevent the illustration from becoming complicated, connection lines between a temperature control portion 12 and a set of first to fourth heaters H1 to H4 and connection lines between the temperature control portion 12 and a set of temperature sensors T1 to T4 are omitted.

The secondary cell-type fuel cell system according to the fourth embodiment of the present invention has a structure in which the pump 4 and the control portion 7 are removed from the secondary cell-type fuel cell system according to the second embodiment of the present invention; instead, the first to fourth heaters H1 to H4, the first to fourth temperature sensors T1 to T4, and the temperature control portion 12 are included. The temperature control by the temperature control portion 12 is the same as the third embodiment of the present invention; accordingly, description of it is skipped.

The control portion 7 of the secondary cell-type fuel cell system according to the second embodiment of the present invention targets the pump 4 for the control, while the temperature control portion 12 of the secondary cell-type fuel cell system according to the fourth embodiment of the present invention targets the first to fourth heaters H1 to H4 for the control; however, both control the gas flow rate in the end and their control operations are the same as each other in terms of the gas flow rate. Accordingly, the secondary cell-type fuel cell system according to the fourth embodiment of the present invention brings the same effects as the secondary cell-type fuel cell system according to the second embodiment of the present invention.

In the meantime, it is also possible to practically use a combination of the second embodiment of the present invention and the fourth embodiment of the present invention, namely, use both of: the circulator for forcibly circulating the gas between the fuel generation portion 1 and the fuel cell portion 2 by using the mechanical energy; and the heating apparatus that gives the temperature gradient to the gas flow path for circulating the gas between the fuel generation portion 1 and the fuel cell portion 2.

### <Modifications>

In each embodiment described above, as the electrolyte membrane 2A of the fuel cell portion 2, a solid oxide electrolyte is used to generate water at the fuel electrode 2B during the power generation. According to this structure, the water is generated on the side where the fuel generation portion 1 is disposed; accordingly, it is advantageous to simplification and size reduction of the apparatus. On the other hand, like the fuel cell disclosed in JP-A-2009-99491, it is also possible to use a solid polymer electrolyte as the electrolyte membrane 2A of the fuel cell portion 2 that transmits hydrogen ions. However, in this case, during the power generation, the water is generated at the air electrode 2C that is the oxidizer electrode of the fuel cell portion 2; accordingly, a flow path for conducting the water to the fuel generation portion 1 may be disposed. Besides, in each embodiment described above, one fuel cell portion 2 performs both the power generation and the electrolysis of water; however, a structure may be employed, in which the fuel cell (e.g., solid oxide fuel cell dedicated to the power generation) and the electrolysis device (e.g., solid oxide fuel cell dedicated to the electrolysis of water) for water are connected in parallel with each other on the gas flow path with respect to the fuel generation portion 1.

Besides, in each embodiment described above, hydrogen is used as the fuel for the fuel cell portion 2; however, a reducing gas other than the hydrogen such as carbon monoxide, hydrocarbon or the like may be used as the fuel for the fuel cell portion 2.

Besides, in each embodiment described above, air is used as the oxidizing gas; however, an oxidizing gas other than air may be used.

### Reference Signs List

- 1: fuel generation portion
- 2: fuel cell portion
- 2A: electrolyte membrane
- 2B: fuel electrode
- 2C: air electrode
- 3: partition member
- 4: pump
- 4A: pump dedicated to power generation operation
- 4B: pump dedicated to charge operation
- 5: heater
- 6, 9, 10: containers
- 7: control portion
- 8: power source
- 11: pipe
- 12: temperature control portion
- F1: fuel emitting surface
- F2: fuel supplied surface
- H1 to H4: first to fourth heaters
- LD: load
- T1 to T4: first to fourth temperature sensors
- SW1, SW2: switches

## Claims

1. A secondary cell-type fuel cell system comprising:
a fuel generation portion that generates a fuel that is a reducing gas by a chemical reaction and is renewable by a reverse reaction of the chemical reaction;
a power generation-electrolysis portion that has a power generation function to perform power generation by using the reducing gas supplied from the fuel generation portion and an electrolysis function to electrolyze an oxidizing gas that is a product of the reverse reaction and is supplied from the fuel generation portion during a renewal period of the fuel generation portion;
a circulation portion that forcibly circulates a gas, which contains the reducing gas and/or the oxidizing gas, between the fuel generation portion and the power generation-electrolysis portion; and
a control portion that controls the circulation portion;
wherein the control portion controls the circulation portion so that a flow rate of the gas circulated by the circulation portion during power generation operation and that during charge operation are different from each other.

2. The secondary cell-type fuel cell system according to claim 1, wherein
the control portion lessens the flow rate of the gas circulated by the circulation portion during the charge operation than the flow rate of the gas circulated by the circulation portion during the power generation operation.

3. The secondary cell-type fuel cell system according to claim 1 or claim 2, wherein
there is a case where the control portion stops the forcible circulation of the gas performed by the circulation portion during the charge operation to make the flow rate of the gas circulated during the charge operation less than the flow rate of the gas circulated by the circulation portion during the power generation operation.

4. The secondary cell-type fuel cell system according to any one of claims 1 to 3, wherein
the control portion has:
a first control mode in which the flow rate of the gas circulated by the circulation portion during the charge operation is less than the flow rate of the gas circulated by the circulation portion during the power generation operation; and
a second control mode in which the flow rate of the gas circulated by the circulation portion during the charge operation is more than the flow rate of the gas circulated by the circulation portion during the power generation operation.

5. The secondary cell-type fuel cell system according to any one of claims 1 to 4, wherein
during the power generation operation, the control portion controls the circulation portion to circulate the gas at a flow rate having a minimum value in a range where a power generation amount becomes maximum or at a flow rate having a value of the minimum value plus a predetermined margin.

6. The secondary cell-type fuel cell system according to any one of claims 1 to 4, wherein
during the power generation operation, the control portion controls the flow rate of the gas circulated by the circulation portion in accordance with a change in power required by an external load.

7. The secondary cell-type fuel cell system according to any one of claims 1 to 6,
comprising a detection portion that detects a renewed state of the fuel generation portion, wherein the control portion stops the gas circulation performed by the circulation portion when it is detected by the detection portion that the fuel generation portion is renewed up to a predetermined percentage.

8. The secondary cell-type fuel cell system according to any one of claims 1 to 6,
comprising a detection portion that detects a renewed state of the fuel generation portion, wherein the control portion changes the flow rate of the gas circulated by the circulation portion in accordance with the renewed state of the fuel generation portion detected by the detection portion.

9. The secondary cell-type fuel cell system according to claim 8, wherein
the control portion increases the flow rate of the gas circulated by the circulation portion in a case where the renewal percentage of the fuel generation portion detected by the detection portion is small.

10. The secondary cell-type fuel cell system according to any one of claims 7 to 9, wherein
the detection portion detects the renewed state of the fuel generation portion based on a weight change or magnetic permeability change of the fuel generation portion.

11. The secondary cell-type fuel cell system according to any one of claims 1 to 10, comprising:
a first container that houses the fuel generation portion,
a second container that houses the power generation-electrolysis portion, and
a pipe for circulating the gas between the fuel generation portion and the power generation-electrolysis portion.

12. The secondary cell-type fuel cell system according to any one of claims 1 to 10, comprising:
a container that houses the fuel generation portion and the power generation-electrolysis portion, and
a partition member,
wherein a space exists between the fuel generation portion and the power generation-electrolysis portion, and the partition member is disposed in the space.

13. The secondary cell-type fuel cell system according to any one of claims 1 to 12, wherein the circulation portion has a circulator that uses mechanical energy.

14. The secondary cell-type fuel cell system according to any one of claims 1 to 13, wherein the circulation portion has a heating device that gives a temperature gradient to a gas flow path for circulating the gas between the fuel generation portion and the power generation-electrolysis portion, and the circulation portion forcibly circulates the gas in accordance with the temperature gradient.
